# EUROPÄISCHE PATENTSCHRIFT

(11) **EP 1 595 770 B1**
(45) Veröffentlichungstag und Bekanntmachung des Hinweises auf die Patenterteilung: **21.01.2009**
(21) Anmeldenummer: 05004416.3
(22) Anmeldetag: 01.03.2005
(51) Int. Cl.: B60Q 1/04, B62D 25/08

(54) **Kraftfahrzeug mit einer Leuchtmittelaufnahme für ein Aussenleuchtmittel**
Vehicle exhibiting a light source retainer for an external light source
Véhicule présentant un moyen de fixation pour une source lumineuse extérieure

(30) Priorität: 11.05.2004 DE 102004023090
(43) Veröffentlichungstag der Anmeldung: 16.11.2005
(73) Patentinhaber: Dr. Ing. h.c. F. Porsche Aktiengesellschaft, 70435 Stuttgart (DE)
(72) Erfinder: Shakory-Tabrizi, Reza, 71706 Markgröningen (DE)

(56) Entgegenhaltungen:
- EP-A- 1 293 379
- EP-A- 1 481 878
- DE-A1- 4 311 419

## Beschreibung

Die Erfindung betrifft ein Kraftfahrzeug mit einer eine Außenhaut aufweisenden Karosserie, in welche ein Außenleuchtmittel eingesetzt ist, gemäß Oberbegriff des Anspruchs 1.

Aus der DE 43 11 419 C2 ist ein gattungsbildendes Kraftfahrzeug ersichtlich. Es besitzt eine Karosserie mit einer Außenhaut, welche Außenhaut eine Einschuböffnung aufweist, in die ein Außenleuchtmittel, insbesondere ein Scheinwerfer, eingesetzt ist. Zur Befestigung des Außenleuchtmittels dient eine Leuchtmittelaufnahme, die benachbart zur Einschuböffnung an der Innenseite der Außenhaut befestigt ist. Aus Fig. 2 der DE 43 11 419 C2 geht die Leuchtmittelaufnahme im Querschnitt hervor. Sie besitzt eine etwa horizontal ausgerichtete Aufnahmeplatte, die im Querschnitt U-förmig ausgebildet ist. An den Enden der Schenkel der U-förmigen Leuchtmittelaufnahme sind nach außen abkragende Befestigungsflansche ausgebildet, von denen einer aufrecht, also etwa parallel zur Fahrzeughochachse verläuft. Ein anderer der Befestigungsflansche verläuft quer, also etwa waagerecht dazu. Die Befestigungsflansche sind überdies in Fig. 7 der DE 43 11 419 C2 dargestellt, aus der im übrigen noch ein dritter Befestigungsflansch hervorgeht, der bogenförmig als Streifen verläuft und dem Rand der Einschuböffnung angepasst ist. Um bei eingesetztem Scheinwerfer die Spaltmaße des Scheinwerfers gegenüber dem Rand der Einschuböffnung einstellen zu können, ist der Scheinwerfer innerhalb der Leuchtmittelaufnahme über eine Einstelleinrichtung verlagerbar.

Aus der DE 198 18 791 A1 ist ein Kraftfahrzeug mit einer Scheinwerferbefestigung bekannt, die im wesentlichen U-förmig mit ungleichmäßig langen Schenkeln und einer etwa horizontalen Aufnahmeplatte ausgebildet ist. Die Leuchtmittelaufnahme ist mit der Karosserie verbunden. Die Einstellung des Spaltmaßes zwischen Scheinwerfer und Rand der Einschuböffnung erfolgt über eine einstellbare Schraubverbindung.

Aufgabe der Erfindung ist es, ein Kraftfahrzeug der gattungsgemäßen Art anzugeben, bei dem das Spaltmaß zwischen Scheinwerfer und der Einschuböffnung optimiert ist.

Gelöst wird diese Aufgabe mit einem Kraftfahrzeug, welches die in Anspruch 1 genannten Merkmale umfasst. Weitere, die Erfindung ausgestaltende Merkmale sind in den Unteransprüchen angegeben.

Die mit der Erfindung hauptsächlich erzielten Vorteile sind darin zu sehen, dass durch die erfindungsgemäß ausgerichteten Befestigungsflansche und Befestigungsflächen eine Positionierung der Leuchtmittelaufnahme relativ zu der Einschuböffnung in Richtung der Fahrzeughochachse gegeben ist. Nach erfolgter Positionierung der Leuchtmittelaufnahme an der Innenseite der Außenhaut werden beide Teile insbesondere durch Schweißen unlösbar miteinander verbunden. Bereits bei der Montage der Karosserie - Außenhaut, beispielsweise eines Kotflügels, kann die Lage der Aufnahmeplatte der Leuchtmittelaufnahme bezüglich der Einschuböffnung in Richtung dieser Fahrzeughochachse, also in der so genannten Z-Richtung, fixiert werden, so dass beim späteren Einsetzen des Außenleuchtmittels, insbesondere des Scheinwerfers, in die Einschuböffnung nur noch geringe oder keine Einstellarbeiten notwendig sind, um das Spaltmaß zwischen Scheinwerfer und dem Rand der Einschuböffnung einzustellen. Vorzugsweise ist die Einschuböffnung an einer Frontpartie des Kraftfahrzeugs, beispielsweise zumindest teilweise in dem Kotflügel, ausgebildet und bei dem Außenleuchtmittel handelt es sich um einen Scheinwerfer. Denkbar wäre auch die Anordnung der Einschuböffnung mit der Leuchtmittelaufnahme im Heckbereich des Kraftfahrzeugs, um eine Heckleuchte aufzunehmen.

Bei einer Weiterbildung mit den in Anspruch 3 genannten Merkmalen wird erreicht, dass die Aufnahmeplatte der Leuchtmittelaufnahme etwa horizontal verläuft, der unter einem Winkel zur Fahrzeuglängsachse verlaufende, streifenartige Befestigungsflansch ein Abfallen der Frontpartie in Richtung des vorderen Fahrzeugendes ermöglicht, wie dies insbesondere bei Sportwagen der Fall ist.

Bei einem besonders bevorzugten Ausführungsbeispiel gemäß Anspruch 5 ist vorteilhaft, dass einerseits die Leuchtmittelaufnahme an zumindest drei Seiten mit dem Außenhautteil verbunden ist, was eine besonders steife Ausgestaltung ermöglicht und andererseits der Halter eine Befestigung eines daran angrenzenden, anderen Außenhautteils ermöglicht.

Gemäß einer in Anspruch 6 angegebenen Weiterbildung der Erfindung ist vorteilhaft, dass der Halter in seiner erfindungsgemäßen Ausrichtung die Positionierung der Aufnahmeplatte bezüglich der Einschuböffnung mit unterstützt.

Die Erfindung wird nachfolgend anhand von Ausführungsbeispielen mit Bezug auf die Zeichnung näher erläutert. Es zeigen:
- Fig. 1: in einer Perspektive ausschnittweise ein Kraftfahrzeug mit einer Karosserie und einem Außenleuchtmittel,
- Fig. 2: in Explosionsdarstellung einen Ausschnitt der Karosserie mit einer Leuchtmittelaufnahme für das Außenleuchtmittel und
- Fig. 3: ausschnittweise die zusammengesetzte Karosserie mit der Leuchtmittelaufnahme für das Außenleuchtmittel.

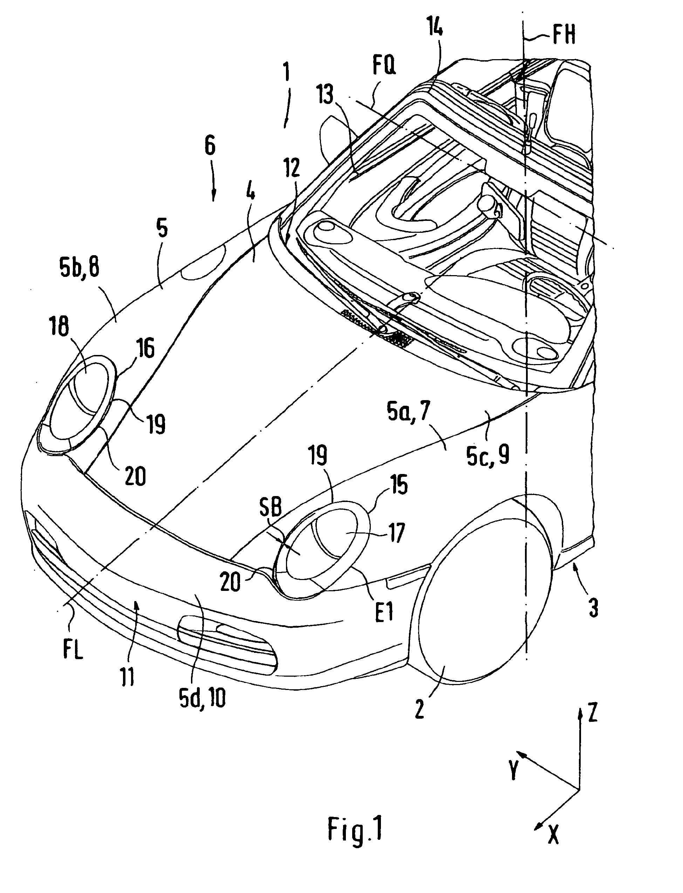

Fig. 1 zeigt von einem teilweise dargestellten Kraftfahrzeug 1 einen von Rädern 2 getragenen Aufbau 3 mit einer Karosserie 4, die eine Außenhaut 5 des Kraftfahrzeugs 1 aufweist. In Fig. 1 ist von dem Aufbau 3 eine Frontpartie 6 des Kraftfahrzeugs 1 dargestellt. Die Außenhaut 5 im Bereich der Frontpartie 6 ist mehrteilig ausgeführt und umfasst mehrere, aneinander grenzende Außenhautteile 5a, 5b, 5c und 5d, die insbesondere als Kotflügel 7 und 8, eine zwischen den Kotflügeln 7 und 8 liegende Haube 9 und ein an die Haube 9 und die Kotflügel 7 und 8 angrenzendes Bugverkleidungsteil 10 ausgeführt sind. Das Bugverkleidungsteil 10 bildet das vordere Fahrzeugende 11. Ausgehend von einem unteren Rahmenteil 12 eines eine Windschutzscheibe 13 tragende Windlaufs 14 fällt die Frontpartie 6 mit ihrer Außenhaut 5 in Richtung des vorderen Fahrzeugendes 11 beispielsweise keilartig ab. In einer von jeweils einem Kotflügel 7 bzw. 8 und dem daran angrenzenden Bugverkleidungsteil 10 begrenzten Einschuböffnung 15 ist jeweils ein Außenleuchtmittel 17 bzw. 18 in die Karosserie 4 eingesetzt ist, das die Außenhaut 5 verschließt und damit eine durchgehende Fläche bilden kann. Die Außenleuchtmittel 17 bzw. 18 sind hier als Scheinwerfer ausgebildet. Zwischen dem Rand 19 der jeweiligen Einschuböffnung 15 bzw. 16 und dem Außenleuchtmittel 17 bzw. 18 befindet sich ein umlaufender Spalt 20 mit einer geringen Spaltbreite SB. Wie aus Fig. 1 noch zu sehen ist, ist die Einschuböffnung 15, 16 etwa oval ausgeführt und liegt zumindest abschnittsweise in einer Ebene E1, die - bedingt durch die in Richtung des vorderen Fahrzeugendes 11 abfallende Frontpartie 6 - unter einem Winkel zu einer hier nicht dargestellten Ebene verläuft, in der eine Fahrzeuglängsachse FL liegt. Außer der Fahrzeuglängsachse FL sind in Fig. 1 noch die Fahrzeugquerachse FQ und die Fahrzeughochachse FH eingezeichnet. Definitionsgemäß bildet die Fahrzeuglängsachse FL eine X-Achse, die Fahrzeugquerachse FQ eine Y-Achse und die Fahrzeughochachse FH eine Z-Achse in einem dreiachsigen Koordinatensystem X, Y, Z.

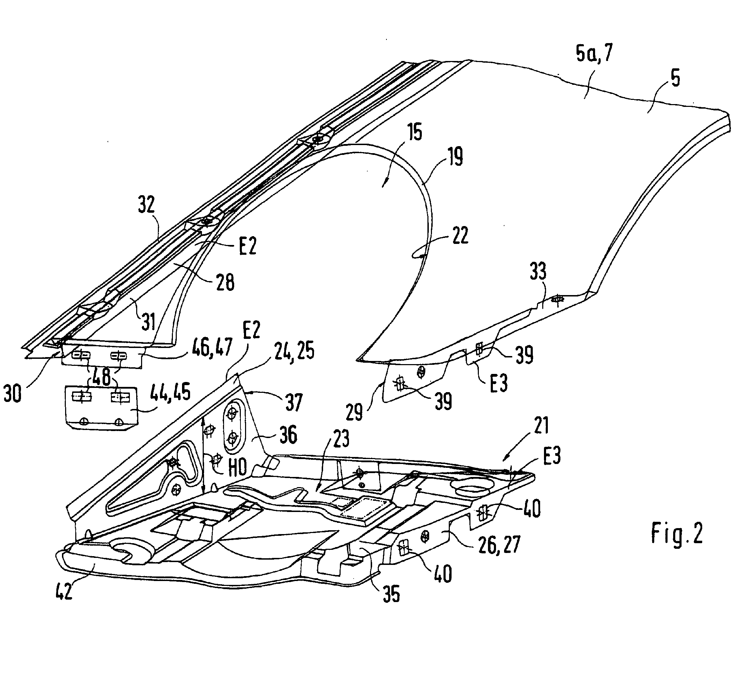

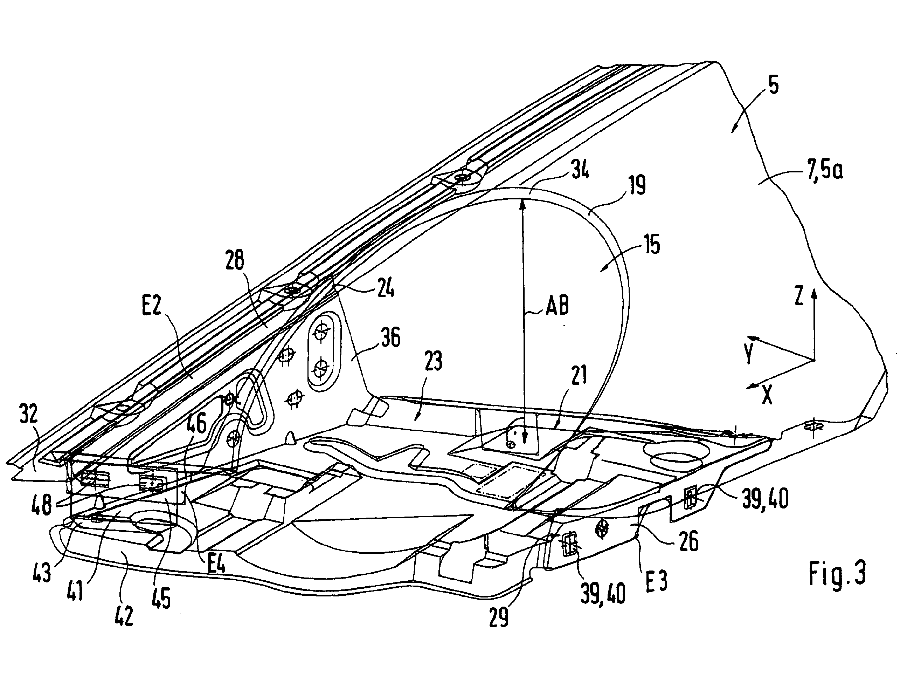

Um das Außenleuchtmittel 17 bzw. 18 in der Einschuböffnung 15 bzw. 16 befestigen zu können, ist benachbart unterhalb jeder Einschuböffnung 15 bzw. 16 eine Leuchtmittelaufnahme 21 angeordnet, die anhand der Fig. 2 und 3 näher beschrieben wird. Gleiche bzw. gleich wirkende Teile wie in Fig. 1 sind mit denselben Bezugszeichen versehen. Die Leuchtmittelaufnahme 21 wird an der Innenseite 22 der Außenhaut 5, hier also an der Innenseite 22 des Kotflügels 7 (Außenhautteil 5a) vorzugsweise unlösbar, beispielsweise durch Schweißen, befestigt. Die Leuchtmittelaufnahme 21 besitzt eine etwa horizontal, also parallel zur Fahrzeuglängsachse FL verlaufende Aufnahmeplatte 23, auf der sich das Außenleuchtmittel 17 (Fig. 1) abstützt. Ferner besitzt die Leuchtmittelaufnahme 21 einen ersten Befestigungsflansch 24, der als Streifen 25 ausgebildet ist, der in Fahrzeuglängsrichtung, also in Richtung der Fahrzeuglängsachse FL verläuft, jedoch einen Winkel (nicht eingezeichnet) mit der Fahrzeuglängsachse FL einschließt. Die Leuchtmittelaufnahme 21 umfasst ferner einen zweiten Befestigungsflansch 26, der ebenfalls als Streifen 27 ausgebildet ist, der in Fahrzeuglängsrichtung, also in Richtung der Fahrzeuglängsachse FL und etwa parallel zur Fahrzeuglängsachse FL verläuft. Der erste und zweite Befestigungsflansch 24 und 26 korrespondiert jeweils mit einer an der Innenseite 22 der Außenhaut 5 vorgesehenen Befestigungsfläche 28 bzw. 29. Die Befestigung der Leuchtmittelaufnahme 21 an der Innenseite 22 erfolgt mithin über die Befestigungsflansche 24 und 26 an den zugeordneten Befestigungsflächen 28 und 29. Die Befestigungsfläche 28 ist an einer nach unten gerichteten Stufe 30 am Außenhautteil 5a ausgebildet, die - ausgehend von dem Niveau der Außenhaut 5 - zunächst nach unten über einen Absatz 31 abfällt, der in eine sich seitlich davon wegerstreckende Befestigungsleiste 32 übergeht, mit der der Kotflügel 7 bzw. das Außenhautteil 5a am Aufbau 3 des Kraftfahrzeugs 1 befestigt wird. Die zweite Befestigungsfläche 29 ist der ersten Befestigungsfläche 28 gegenüberliegend am Kotflügel 7 ausgebildet und geht von einem sich nach innen von der Innenseite 22 wegerstreckenden Absatz 33 am Kotflügel 7 aus. Zwischen den Befestigungsflächen 28 und 29 liegt also die Einschuböffnung 15 bzw. 16. Die sich nach unten erstreckende Befestigungsfläche 29, an der der zweite Befestigungsflansch 26 angebunden wird, dient überdies der Befestigung des Kotflügels 7 am Aufbau 3.

Um die Spaltbreite Sb des umlaufenden Spaltes 20 zumindest abschnittweise beeinflussen zu können, ist eine Positionierung der Aufnahmeplatte 23 in Z - Richtung vorgesehen, wodurch ein in Z-Richtung zu messender Abstand AB als Lotrechte zwischen der Aufnahmeplatte 23 und der so genannten Zwölf-Uhr-Position 34 am Rand 19 der Einschuböffnung 15 eingestellt werden kann, wie dies in Fig. 3 eingetragen ist. Hierfür sind der erste und zweite Befestigungsflansch 24 und 26 sowie die zugehörigen ersten und zweiten Befestigungsflächen 28 und 29 so ausgerichtet, dass sie jeweils in einer Ebene E2 bzw. E3 liegen bzw. diese aufspannen, zu denen die Fahrzeughochachse FH eine Parallele bildet. Die Ebenen E2 bzw. E3 stehen also aufrecht, verlaufen also parallel zur Z-Achse bzw. in den Ebenen E2 bzw. E3 liegt eine gedachte, hier nicht eingezeichnete Vertikale. Beim miteinander Verbinden des Kotflügels 7 mit der Leuchtmittelaufnahme 21 kann so durch Positionieren der Leuchtmittelaufnahme 21 in Z-Richtung der Abstand AB (Fig. 3) eingestellt werden, so dass das Außenleuchtmittel 17 bzw. 18 insbesondere in Z-Richtung bezüglich des Randes 19 der Einschuböffnung 15 entsprechend der geforderten Spaltbreite SB ausgerichtet ist. Für eine Feineinstellung der Spaltbreite SB kann zwischen dem Außenleuchtmittel 17 bzw. 18 und der Leuchtmittelaufnahme 21, insbesondere der Aufnahmeplatte 23, noch eine hier nicht dargestellte Einstelleinrichtung vorgesehen sein, die ggf. zusätzlich eine Einstellung des Außenleuchtmittels 17 bzw. 18 in Y - Richtung ermöglicht.

Die Leuchtmittelaufnahme 21 ist - in Richtung der Fahrzeugquerachse FQ gesehen - im Querschnitt etwa L - förmig ausgebildet und weist einen Horizontalschenkel 35 und einen Vertikalschenkel 36 auf. Der Horizontalschenkel 35 bildet die Aufnahmeplatte 23 und der Vertikalschenkel 36 trägt an seinem Ende, gegebenenfalls über eine Kröpfung 37, den ersten Befestigungsflansch 24. Wie insbesondere in Fig. 2 zu sehen ist, nimmt die Höhe HO des Vertikalschenkels 36 in Richtung des vorderen Fahrzeugendes 11 ab. An dem dem Vertikalschenkel 36 gegenüberliegenden Ende 38 der Aufnahmeplatte 23 geht der randseitig nach unten abgebogene zweite Befestigungsflansch 26 aus, der mit in der zweiten Befestigungsfläche 29 angeordneten Befestigungsdurchbrüchen 39 korrespondierende Durchbrüche 40 aufweist, durch die hier nicht dargestellte Befestigungsmittel hindurchgreifen, um den Kotflügel 7 mit dem Aufbau 3 verbinden zu können. Die Leuchtmittelaufnahme 21 ist insbesondere einstückig als Blech-Formteil hergestellt.

Wie aus den Fig. 2 und 3 hervorgeht, ist die Leuchtmittelaufnahme 21 zusätzlich über einen insbesondere als separates Teil ausgebildeten Halter 41 mit der Innenseite 22 an dem Kotflügel 7 befestigt. Dieser plattenförmige Halter 41 erstreckt sich etwa in Fahrzeugquerrichtung, also parallel zur Fahrzeugquerachse FQ, und ist insbesondere zu einem vorderen Begrenzungsrand 42 der Aufnahmeplatte 23 benachbart angeordnet. Der Halter 41 ist - in Richtung der Fahrzeuglängsachse FL gesehen - im Querschnitt L - förmig ausgebildet und ist mit seinem Horizontalabschnitt 43 mit der Aufnahmeplatte 23, vorzugsweise unlösbar, verbunden. Der Vertikalabschnitt 44 bildet einen dritten Befestigungsflansch 45 der mit einer am Kotflügel 7 ausgebildeten dritten Befestigungsfläche 46, vorzugsweise unlösbar, verbunden ist. Die dritte Befestigungsfläche 46 ist als Streifen 47 ausgebildet, und die dritte Befestigungsfläche 46 sowie der Vertikalabschnitt 44 des Halters 41 spannen einen Ebene E4 auf bzw. liegen in der vertikalen Ebene E4, zu der die Fahrzeughochachse FH eine Parallele bildet. Allerdings ist die Ebene E4 so orientiert, dass auch die Fahrzeugquerachse FQ parallel dazu verläuft, wohingegen die Ebenen E2 und E3 parallel zur Fahrzeuglängsachse FL und zur Fahrzeughochachse FH verlaufen.

Der Halter 41 dient neben der Verbindung der Aufnahmeplatte 23 mit dem Kotflügel 7 noch der Befestigung des Bugverkleidungsteils 10 an der Karosserie 4. Hierfür sind jeweils in der dritten Befestigungsfläche 46 und dem dritten Befestigungsflansch 45 zumindest ein Befestigungsdurchbruch 48, vorzugsweise jeweils zwei Befestigungsdurchbrüche 48, eingebracht, durch die Befestigungsmittel für das Bugverkleidungsteil 10 hindurch greifen. Vorzugsweise wird der Halter 41 mit seinem Horizontalabschnitt 43 durch Schweißen mit der Aufnahmeplatte 23 verbunden. Vorzugsweise werden auch die Befestigungsflansche 24, 26 und 45 durch Schweißen mit der zugehörigen Befestigungsfläche 28, 29 und 46 verbunden.

## Patentansprüche

1. Kraftfahrzeug mit einer eine Außenhaut aufweisenden Karosserie, einem Außenleuchtmittel, das in eine Einschuböffnung in der Außenhaut eingesetzt ist, und mit einer benachbart zur Einschuböffnung an einer Innenseite der Außenhaut befestigten Leuchtmittelaufnahme, die zumindest eine etwa horizontal ausgerichtete Aufnahmeplatte und zumindest einen ersten und zweiten Befestigungsflansch aufweist, welche Befestigungsflansche mit an der Innenseite der Außenhaut ausgebildeten erste und zweite Befestigungsflächen verbunden sind, **dadurch gekennzeichnet, dass** sowohl die Befestigungsflansche (24, 26, 45) als auch die Befestigungsflächen (28, 29, 46) in einer Ebene (E2, E3, E4) liegen, zu denen eine Fahrzeughochachse (FH) eine Parallele bildet.

2. Kraftfahrzeug nach Anspruch 1, **dadurch gekennzeichnet, dass** die Leuchtmittelaufnahme (21) - im Querschnitt in Richtung einer Fahrzeugquerachse (FQ) - etwa L - förmig ausgebildet ist und einen Horizontalschenkel (35) und einen Vertikalschenkel (36) aufweist, dass der Vertikalschenkel (36) einen ersten der Befestigungsflansche (24) aufweist und dass von dem Horizontalschenkel (35) randseitig ein zweiter der Befestigungsflansche (26) ausgeht.

3. Kraftfahrzeug nach Anspruch 1 oder 2, **dadurch gekennzeichnet, dass** der erste Befestigungsflansch (24) als Streifen (27) etwa in Fahrzeuglängsrichtung, jedoch unter einem Winkel zu einer Fahrzeuglängsachse (FL) verläuft, und dass der zweite Befestigungsflansch (26) als Streifen (27) etwa in Fahrzeuglängsrichtung und etwa parallel zur Fahrzeuglängsachse (FL) ausgerichtet ist.

4. Kraftfahrzeug nach Anspruch 1, **dadurch gekennzeichnet, dass** der Rand (19) der Einschuböffnung (15) von zwei aneinander angrenzenden Außenhautteilen (5a, 5b, 5c, 5d) der Karosserie (4) gebildet wird.

5. Kraftfahrzeug nach Anspruch 1 und 4, **dadurch gekennzeichnet, dass** der erste und zweite Befestigungsflansch (26) an einem der Außenhautteile (5a, 5b) befestigt sind, dass die Leuchtmittelaufnahme (21) zusätzlich über einen separaten Halter (41) mit diesem Außenhautteil (5a, 5b) verbunden ist und dass das andere der Außenhautteile (5d) zumindest an dem Halter (41) befestigt ist.

6. Kraftfahrzeug nach Anspruch 5, **dadurch gekennzeichnet, dass** das Außenhautteil (5a, 5b), an dem der Halter (41) befestigt ist, eine dritte Befestigungsfläche (46) für den Halter (41) aufweist, die - wie die erste und zweite Befestigungsfläche (24, 26) - eine Ebene (E4) aufspannt, zu der die Fahrzeughochachse (FH) die Parallele bildet.

7. Kraftfahrzeug nach Anspruch 6, **dadurch gekennzeichnet, dass** die dritte Befestigungsfläche (46) als Streifen (47) ausgebildet ist, der etwa parallel zu einer Fahrzeugquerachse (FQ) verläuft.

8. Kraftfahrzeug nach Anspruch 6 und 7, **dadurch gekennzeichnet, dass** der Halter (41) - im Querschnitt in Richtung der Fahrzeuglängsachse (FL) - L - förmig ausgebildet ist und dass ein Horizontalabschnitt (43) des Halter (41) mit der Aufnahmeplatte (23) verbunden ist sowie ein Vertikalabschnitt (44) des Halters (41) einen dritten Befestigungsflansch (45) aufweist, der mit der dritten Befestigungsfläche (46) verbunden ist.

## Claims

1. Motor vehicle having bodywork which has external skin, an external lighting means which is inserted into an insertion opening in the outer skin, and having a lighting means receptacle which is attached to an inside of the outer skin adjacent to the insertion opening and which has at least one approximately horizontally aligned receptacle plate and at least a first and a second attachment flange, which attachment flanges are connected to first and second attachment faces which are formed on the inside of the outer skin, **characterized in that** both the attachment flanges (24, 26, 45) and the attachment faces (28, 29, 46) lie in a plane (E2, E3, E4) to which a vertical axis (FH) of the vehicle forms a parallel.

2. Motor vehicle according to Claim 1, **characterized in that** the lighting means receptacle (21) is formed in an approximate L shape in cross section in the direction of a transverse axis (FQ) of the vehicle, and has a horizontal limb (35) and a vertical limb (36), **in that** the vertical limb (36) has a first of the attachment flanges (24), and **in that** a second of the attachment flanges (26) starts from the edge of the horizontal limb (35).

3. Motor vehicle according to Claim 1 or 2, **characterized in that** the first attachment flange (24) extends as a strip (27) approximately in the longitudinal direction of the vehicle but at an angle to a longitudinal axis (FL) of the vehicle, and **in that** the second attachment flange (26) is oriented as a strip (27) approximately in the longitudinal direction of the vehicle and approximately parallel to the longitudinal axis (FL) of the vehicle.

4. Motor vehicle according to Claim 1, **characterized in that** the edge (19) of the insertion opening (15) is formed by two adjoining outer skin parts (5a, 5b, 5c, 5d) of the bodywork (4).

5. Motor vehicle according to Claims 1 and 4, **characterized in that** the first and second attachment flanges are attached to one of the outer skin parts (5a, 5b), **in that** the lighting means receptacle (21) is additionally connected to this outer skin part (5a, 5b) via a separate fastener (41), and **in that** the other of the outer skin parts (5d) is attached at least to the fastener (41).

6. Motor vehicle according to Claim 5, **characterized in that** the outer skin part (5a, 5b) to which the fastener (41) is attached has a third attachment face (46) for the fastener (41), which third attachment face (46) spans, like the first and second attachment faces (24, 26), a plane (E4) to which the vertical axis (FH) of the vehicle forms the parallel.

7. Motor vehicle according to Claim 6, **characterized in that** the third attachment face (46) is embodied as a strip (47) which extends approximately parallel to a vertical axis (FQ) of the vehicle.

8. Motor vehicle according to Claims 6 and 7, **characterized in that** the fastener (41) is embodied in an L shape in cross section in the direction of the longitudinal axis (FL) of the vehicle, and **in that** a horizontal section (43) of the fastener (41) is connected to the receptacle plate (23), and a vertical section (44) of the fastener (41) has a third attachment flange (45) which is connected to the third attachment face (46).

## Revendications

1. Véhicule automobile comprenant une carrosserie présentant un panneau extérieur, un moyen d'éclairage extérieur, qui est inséré dans une ouverture d'insertion dans le panneau extérieur, et un logement pour moyen d'éclairage fixé à côté de l'ouverture d'insertion sur un côté intérieur du panneau extérieur, qui présente au moins une plaque de réception orientée approximativement horizontalement et au moins une première et une deuxième bride de fixation, qui sont connectées à des première et deuxième surfaces de fixation réalisées sur le côté intérieur du panneau extérieur, **caractérisé en ce que** les brides de fixation (24, 26, 45) ainsi que les surfaces de fixation (28, 29, 46) se situent dans un plan (E2, E3, E4) qui est parallèle à un axe vertical du véhicule (FH).

2. Véhicule automobile selon la revendication 1, **caractérisé en ce que** le logement pour moyen d'éclairage (21) est réalisé approximativement en forme de L - en coupe transversale dans la direction d'un axe transversal du véhicule (FQ), et présente une branche horizontale (35) et une branche verticale (36), **en ce que** la branche verticale (36) présente une première des brides de fixation (24) et **en ce qu'**une deuxième des brides de fixation (26) part de la branche horizontale (35) du côté du bord.

3. Véhicule automobile selon la revendication 1 ou 2, **caractérisé en ce que** la première bride de fixation (24) s'étend sous forme de bande (27) approximativement dans la direction longitudinale du véhicule, mais suivant un certain angle par rapport à l'axe longitudinal du véhicule (FL), et **en ce que** la deuxième bride de fixation (26) est orientée sous forme de bande (27) approximativement dans la direction longitudinale du véhicule et approximativement parallèlement à l'axe longitudinal du véhicule (FL).

4. Véhicule automobile selon la revendication 1, **caractérisé en ce que** le bord (19) de l'ouverture d'insertion (15) est formé par deux parties de panneau extérieur (5a, 5b, 5c, 5d) de la carrosserie (4) adjacentes l'une à l'autre.

5. Véhicule automobile selon les revendications 1 et 4, **caractérisé en ce que** la première et la deuxième bride de fixation (26) sont fixées sur l'une des parties de panneau extérieur (5a, 5b), **en ce que** le logement pour moyen d'éclairage (21) est en outre connecté par le biais d'une fixation séparée (41) à cette partie de panneau extérieur (5a, 5b), et **en ce que** l'autre des parties de panneau extérieur (5d) est fixée au moins à la fixation (41).

6. Véhicule automobile selon la revendication 5, **caractérisé en ce que** la partie de panneau extérieur (5a, 5b) à laquelle est fixée la fixation (41), présente une troisième surface de fixation (46) pour la fixation (41), qui sous-tend un plan (E4), comme la première et la deuxième surface de fixation (24, 26), lequel est parallèle à l'axe vertical du véhicule (FH).

7. Véhicule automobile selon la revendication 6, **caractérisé en ce que** la troisième surface de fixation (46) est réalisée sous forme de bande (47) qui s'étend approximativement parallèlement à un axe transversal du véhicule (FQ).

8. Véhicule automobile selon les revendications 6 et 7, **caractérisé en ce que** la fixation (41) est réalisée en forme de L - en coupe transversale dans la direction de l'axe longitudinal du véhicule (FL), et **en ce qu'**une portion horizontale (43) de la fixation (41) est connectée à la plaque de réception (23), une portion verticale (44) de la fixation (41) présentant une troisième bride de fixation (45) qui est connectée à la troisième surface de fixation (46).
